# EUROPEAN PATENT APPLICATION

(11) **EP 2 177 814 A1**
(43) Date of publication of application: **21.04.2010**
(21) Application number: 08738762.7
(22) Date of filing: 24.03.2008
(51) Int. Cl.: F21S 2/00, F21V 19/00, G02F 1/13357, H01J 5/50, H01R 33/02, H01R 33/90, F21Y 103/00

(54) **ILLUMINATING DEVICE FOR DISPLAY DEVICE, DISPLAY DEVICE, AND TELEVISION RECEIVING APPARATUS**

(30) Priority: 16.08.2007 JP 2007212327
(71) Applicant: Sharp Kabushiki Kaisha, Osaka-shi, Osaka 545-8522 (JP)
(72) Inventor: CHO, Shiyoshi, Osaka 545-8522 (JP)
(74) Representative: Müller - Hoffmann & Partner
(86) International application number: PCT/JP2008/055423
(87) International publication number: WO 2009/022480

(57) **Abstract**

A lighting device for a display device, according to the present invention, includes a tubular light source 15 and a relay connector 14 used to supply power to the tubular light source 15. The tubular light source 15 includes a glass tube 34 and a ferrule 36 having a cylindrical shape capable of being fitted to the glass tube 34. The ferrule 36 is arranged to electrically connect the tubular light source 15 to the terminal 14. The ferrule 36 includes an inner-diameter-changing elastic member 38 capable of elastic and radial deformation, so that its inner diameter is variable according to the outer diameter of the glass tube 34.

## Description

### TECHNICAL FIELD

The present invention relates to a lighting device for a display device, a display device and a television receiver.

### BACKGROUND ART

A liquid crystal display device used in a television receiver typically includes a liquid crystal panel and a backlight arranged on the backside of the liquid crystal panel. One of the known backlights includes lamps (or light sources) such as cold cathode tubes, a chassis arranged to contain the lamps, and an inverter arranged to drive the lamps (as shown in Patent Document 1, for example).
Patent Document 1: JP-A-2006-351527

### (Problem to be Solved by the Invention)

In the backlight disclosed in Patent Document 1, terminals for connecting the lamps with the inverter are mounted to the chassis, so that power can be supplied for the lamps fitted to the terminals. In this case, each lamp should have external electrodes at respective ends, and the external electrodes can be attached to the lamp as follows.

Cylindrical ferrules for a lamp are prepared as external electrodes, for example, and the assembly can be completed by fitting the lamp into the external electrodes. In this case, the ferrules should have an inner diameter corresponding to the outer diameter of the lamp. That is, different ferrules should be provided to correspond one-to-one with different shapes of lamps. Further, the outer shapes (or outer diameters) of the ferrules should be varied to correspond one-to-one with different shapes of the above terminals. Accordingly, different ferrules should be fitted to lamps of different types of television receivers, if the outer diameters of the lamps vary depending on the types of television receivers, for example. Preparing different ferrules for different outer diameters of lamps requires a lot of time and effort, and may cause reduction in manufacturing efficiency, which can lead to increase in cost. Further, ferrules unconformable to the outer diameter may be incorrectly mounted to lamps and thereby cause defects, which can lead to reduction in yield rate.

### DISCLOSURE OF THE INVENTION

The present invention was made in view of the foregoing circumstances, and an object thereof is to provide a highly-reliable lighting device for a display device, in which common ferrules capable of being used for any shape of lamps (or tubular light sources) are provided as ferrules used to supply power for lamps, in order to improve the manufacturing efficiency and suppress the increase in cost. A further object of the present invention is to provide a highly-reliable display device and a television receiver.

### (Means for Solving the Problem)

In order to solve the above problem, a lighting device for a display device, according to the present invention, includes a tubular light source, and a terminal used to supply power to the tubular light source. The tubular light source includes a glass tube, and a ferrule having a cylindrical shape capable of being fitted to the glass tube. The ferrule is arranged to electrically connect the tubular light source to the terminal. The ferrule includes an inner-diameter-changing elastic member capable of elastic and radial deformation, so that the inner diameter thereof is variable according to the outer diameter of the glass tube.

In the present lighting device for a display device, the tubular light source includes a glass tube and a ferrule, while the ferrule includes an inner-diameter-changing elastic member so that the inner diameter thereof is variable depending on the outer diameter of the glass tube. According to the construction, even if the outer diameter of the glass tube is changed due to a design change for varying the brightness of the tubular light source according to the type of a display device using the present lighting device, for example, the same ferrule as that having been used before the design change can be used as a common ferrule. For example, the same ferrule can be used as a common ferrule for a glass tube having a tube diameter of 3mm and a glass tube having a tube diameter of 4mm, without the need for preparing separate ferrules differing in inner diameter. The ferrule as a common ferrule can be used to provide electrical connection with the terminal, which enables reliable power supply for the tubular light source. Consequently, the present lighting device can be provided as a highly-reliable lighting device for a display device. The common ferrule can lead to reduction in number of types of ferrules to be manufactured, resulting in improvement of manufacturing efficiency. Further, defects, which may be caused by mounting a ferrule unconformable to the outer diameter of a lamp, can be reliably prevented. Thereby, the reliability and the manufacturing yield can be improved.

In the above lighting device for a display device, the inner-diameter-changing elastic member may be provided to undergo elastic deformation while having contact with the outer surface of the glass tube in the course of insertion of the glass tube into the ferrule.
If the inner-diameter-changing elastic member is thus constructed to undergo elastic deformation while having contact with the outer surface of the glass tube in the course of insertion of the glass tube into the ferrule, the glass tube can be smoothly inserted into the ferrule.

In the above lighting device for a display device, the inner-diameter-changing elastic member can include a plurality of inner-diameter-changing elastic members, which are arranged at even intervals along the circumferential direction of the ferrule.
If the plurality of inner-diameter-changing elastic members are thus arranged at even intervals along the circumferential direction of the ferrule, the inner diameter of the ferrule can vary evenly along the radial direction. Consequently, the ferrule can be fitted on the glass tube in a balanced manner, while being prevented from uneven radial variation.

The inner-diameter-changing elastic member can be provided at each axial end of the ferrule.
In this case, the radial variation according to the outer diameter of the glass tube is possible at both ends of the ferrule, and therefore the inner diameter of the ferrule can be provided more uniformly along the axial direction. Consequently, the ferrule can be fitted on the glass tube in a balanced manner.

In the case that the inner-diameter-changing elastic member includes a plurality of inner-diameter-changing elastic members arranged at even intervals along the circumferential direction of the ferrule and at axial ends of the ferrule, a member of a group of first inner-diameter-changing elastic members arranged at even intervals and at one of the axial ends and a member of a group of second inner-diameter-changing elastic members arranged at even intervals and at another of the axial ends may be alternately arranged in staggered form when the ferrule is viewed along the axial direction.
According to the present construction in which a member of the group of first inner-diameter-changing elastic members arranged at one axial end of the ferrule and a member of the group of second inner-diameter-changing elastic members arranged at the other axial end are alternately arranged in staggered form, the glass tube fitted thereto can be stably held therein. That is, the contact points between the ferrule and the glass tube are located so that those provided on one end portion are displaced along the circumferential direction from those provided on the other end portion, which enables stable fitting.

The first inner-diameter-changing elastic members as members of the group of first inner-diameter-changing elastic members may be arranged at the same intervals along the circumferential direction, as intervals at which the second inner-diameter-changing elastic members as members of the group of second inner-diameter-changing elastic members are arranged along the circumferential direction.
If the arrangement interval is thus set to the same distance for members provided at respective ends of the ferrule, the ferrule can be fitted on the glass tube in a more balanced manner.

When the first inner-diameter-changing elastic members as members of the group of first inner-diameter-changing elastic members can be arranged at intervals of a distance represented by X along the circumferential direction, the second inner-diameter-changing elastic members as members of the group of second inner-diameter-changing elastic members may be located to be shifted by a distance represented by X/2 from the first inner-diameter-changing elastic members when the ferrule is viewed along the axial direction.
According to the present construction in which the members provided at one end of the ferrule are located to be shifted by a distance of X/2 from the members provided at the other end, the ferrule can be fitted on the glass tube in a more balanced manner. Specifically, in the case that three first inner-diameter-changing elastic members are arranged at one end and at intervals of 120° while three second inner-diameter-changing elastic members are arranged at the other end and also at intervals of 120°, the second inner-diameter-changing elastic members can be located to be shifted by 60° from the respective first inner-diameter-changing elastic members when the ferrule is viewed along the axial direction.
According to the construction, the contact points between the ferrule and the glass tube are provided at respective ends of the ferrule so as to be alternately arranged in staggered form, which enables stable fitting of the glass tube.

The inner-diameter-changing elastic member may be provided to include an elastic part formed of a leaf-spring-like part provided in a hollow of the ferrule.
In this case, the inner-diameter-changing member can be achieved by a simple construction, i.e., the elastic part provided as an inner-diameter-changing elastic member in the hollow of the ferrule. Particularly when conductive metal is used as a material for the ferrule, the present construction can be more readily achieved by partly cutting the ferrule to form an elastic part capable of being used as a leaf spring.

The elastic part formed of a leaf-spring-like part can be provided to extend along the axial direction of the ferrule. The elastic part may be provided to include a curved portion that is bent to bulge radially inwardly from the inner surface of the ferrule, and further include an inclined surface extending from the apex of the curved portion to an end portion of the ferrule, so that the glass tube can be guided into the ferrule along the inclined surface.
The elastic part thus constructed can combine a function for enabling variation of the inner diameter of the ferrule and a function for guiding the glass tube. Consequently, the insertion of the glass tube into the ferrule is facilitated, and the variation of the inner diameter of the ferrule can be adequately achieved due to elastic deformation of the elastic part during the insertion.

A chassis can be arranged to contain the tubular light source, and the above terminal can be mounted to the chassis. The terminal may include an engaging base portion to which the ferrule of the tubular light source is fitted. Fitting the ferrule of the tubular light source to the engaging base portion can achieve mounting of the tubular light source to the chassis, and concurrently complete a configuration for allowing power supply to the tubular light source.
According to the construction, the mounting of the tubular light source to the chassis and the configuration for allowing power supply to the tubular light source can be concurrently achieved by simply fitting the ferrule to the engaging base portion of the terminal. Further, in view of the common ferrule of the present invention as a ferrule capable of being used for glass tubes of tubular light sources differing in diameter, the shape of the engaging base portion (i.e., the shape for engaging with the ferrule) can be standardized. That is, the shape of the engaging base portion provided for engaging with the ferrule can be standardized to conform with the common ferrule, because the same ferrule can be used regardless of the diameter of the glass tube.

The chassis can have a planar surface on the side of the tubular light source contained in the chassis, and the above terminal can be arranged on the planar surface. An inverter board for supplying power to the tubular light source may be arranged on a surface of the chassis that is on the opposite side of the tubular light source contained in the chassis. The terminal can be arranged to penetrate through the chassis, and can be connected to the inverter board.
This connecting structure can adequately achieve the mounting of the tubular light source to the chassis and the configuration for allowing power supply to the tubular light source.

The tubular light source can include an outer lead that projects from an end portion of the glass tube and extends along the axial direction of the glass tube, while the ferrule can include a conductive part that extends from one end thereof and is connected to the outer lead.
This construction can provide a good electrical connection between the ferrule and the outer lead of the glass tube.

In order to solve the above problem, a display device according to the present invention includes a lighting device for a display device described above, and a display panel for providing display by use of light from the lighting device for a display device.
This construction can provide a highly-reliable display device, in which the lighting device is immune to defects.

A liquid crystal panel can exemplify the above display panel. The display device as a liquid crystal display device has a variety of applications, such as a television display or a personal-computer display. Particularly, it is suitable for a large-screen display.

### (Effect of the Invention)

A highly-reliable lighting device for a display device can be provided, in which common ferrules capable of being used for any shape of tubular light sources are provided as ferrules used to supply power for tubular light sources, in order to improve the manufacturing efficiency and suppress the increase in cost.

### BRIEF DESCRIPTION OF THE DRAWINGS

[FIG. 1] is an exploded perspective view showing the general construction of a television receiver according to the present embodiment;
[FIG. 2] is a horizontal sectional view of a liquid crystal display device included in the television receiver;
[FIG. 3] is a front perspective view of a lighting device included in the liquid crystal display device;
[FIG. 4] is a front view of the lighting device;
[FIG. 5] is a perspective view of relay connectors;
[FIG. 6] is a partially-enlarged front view showing a connecting structure between a relay connector and a discharge tube;
[FIG. 7] is a side view of a relay connector;
[FIG. 8] is an explanatory diagram showing the relay connector into which a ferrule of a discharge tube is fitted;
[FIG. 9] is a sectional view showing a connecting structure between a relay connector and a power board;
[FIG. 10] is a perspective view of a discharge tube;
[FIG. 11] is a rear view of a ferrule;
[FIG. 12] is a plan view of the ferrule;
[FIG. 13] is a side view of the ferrule;
[FIG. 14] is an explanatory diagram showing the ferrule into which a first glass tube (A) is fitted;
[FIG. 15] is an explanatory diagram showing the ferrule into which a second glass tube (A) is fitted;
[FIG. 16] is an explanatory diagram showing how a glass tube is inserted into the ferrule;
[FIG. 17] is an explanatory diagram showing when the glass tube shown in FIG. 16 has been further inserted into the ferrule; and
[FIG. 18] is a side view showing a modification of the ferrule.

### Explanation of Symbols

D: Display device, TV: Television receiver, 10: Lighting device (Lighting device for display device), 13: Chassis, 14: Relay connector (Terminal), 15: Discharge tube (Tubular light source), 16: Power board (Inverter board), 24: Receiving opening (Engaging base portion), 34: Glass tube, 35: Outer lead, 36: Ferrule, 37: Body, 38: Elastic part (Inner-diameter-changing elastic member), 38A: First elastic part (First inner-diameter-changing elastic member, Group of first inner-diameter-changing elastic members), 38B: Second elastic part (Second inner-diameter-changing elastic member, Group of second inner-diameter-changing elastic members), 39: Curved portion, 40: Conductive part, 42: Cylindrical portion, 80: Inclined surface.

### BEST MODE FOR CARRYING OUT THE INVENTION

An embodiment of the present invention will be hereinafter explained with reference to the drawings. The explanation will be made for a liquid crystal display device having a lighting device for a display device according to the present invention as a backlight, and further for a television receiver having the liquid crystal display device.

### [Overview of Television Receiver TV]

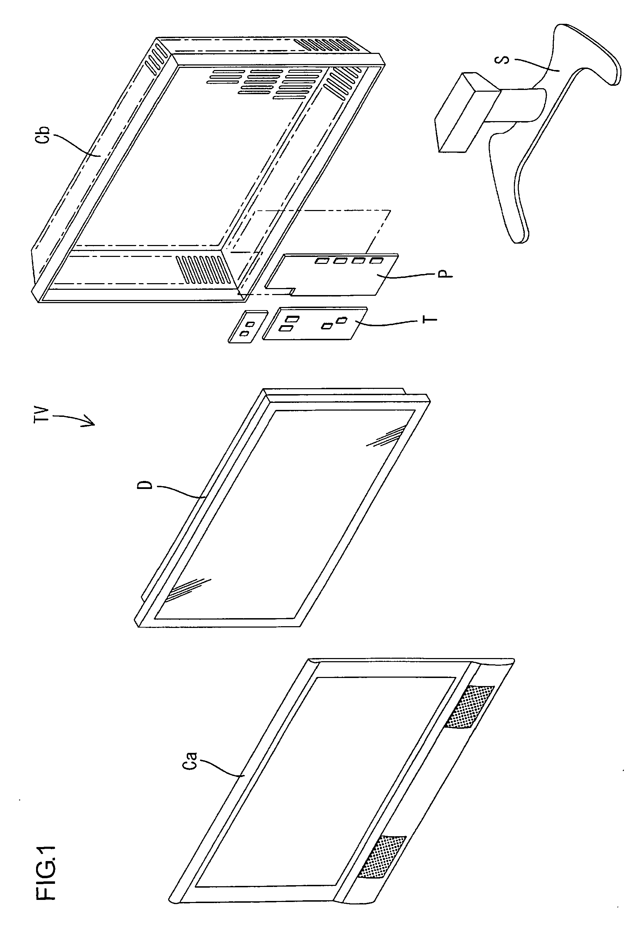

FIG. 1 is an exploded perspective view showing the general construction of the television receiver TV of the present embodiment.

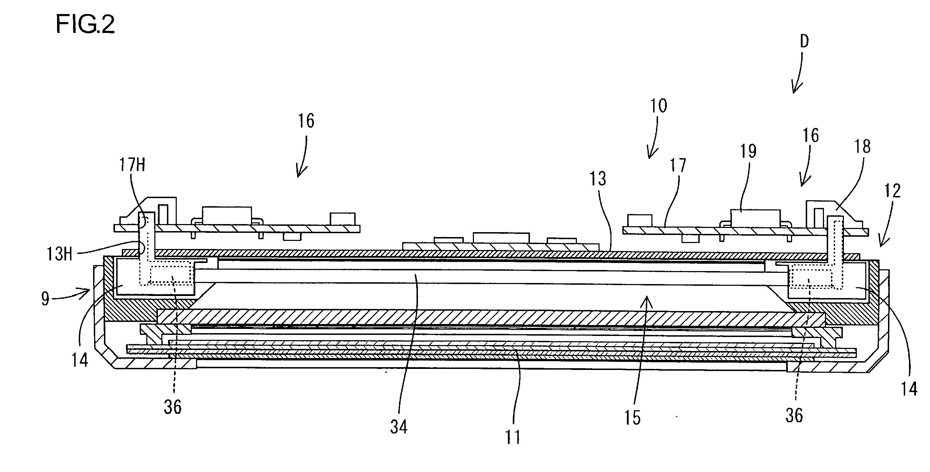

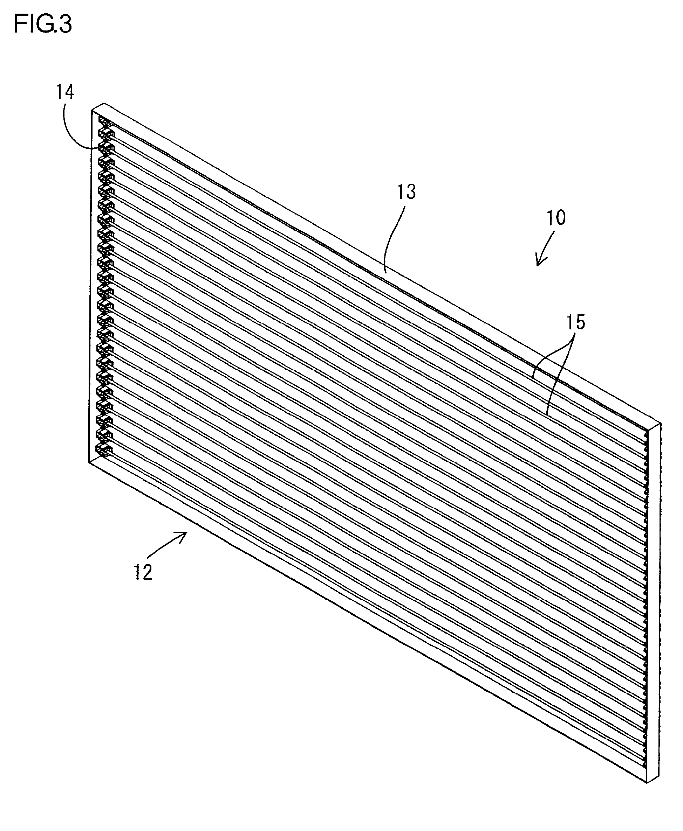

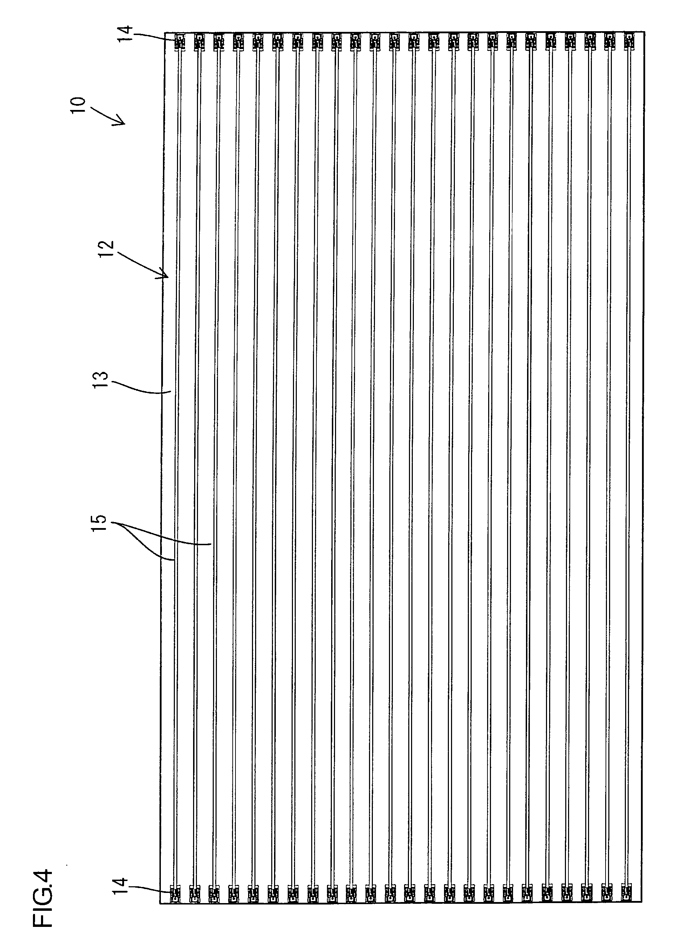

FIG. 2 is a horizontal sectional view of the liquid crystal display device D included in the television receiver TV. FIG. 3 is a front perspective view of the lighting device 10 included in the liquid crystal display device D. FIG. 4 is a front view of the lighting device 10.
The television receiver TV shown in FIG. 1 includes the liquid crystal display device (display device) D, and front and back cabinets Ca and Cb capable of holding the liquid crystal display device D therebetween. Further included are a power source P, a tuner T and a stand S.
The liquid crystal display device D forms a horizontally-elongated rectangular shape as a whole, and includes a liquid crystal panel 11 as a display panel and the lighting device 10 as an external light source for the liquid crystal panel 11, which are covered with a bezel 9 on the front side (or display surface side) and thereby are held in an assembled state, as shown in FIG. 2. The liquid crystal panel 11 is disposed on the front side of the lighting device 10, so that the lighting device 10 can illuminate the liquid crystal panel 11 from the back side.

The liquid crystal panel 11 has a well-known construction,
in which the gap between a pair of glass substrates is filled with liquid crystal as a material with an optical property that changes with applied voltage. TFTs (Thin Film Transistors), as switching elements connected to source wiring lines and gate wiring lines running at right angles to each other, are provided on the TFT substrate or one of the pair of glass substrates, while a color filter having color sections of three primary colors, i.e., Red (R), Green (G) and Blue (B), arranged in a matrix is provided on the CF substrate.

The lighting device 10 includes a lamp unit 12 and power boards (or inverter boards) 16. The lamp unit 12 includes a metallic chassis 13 generally formed of a horizontally-elongated rectangular plate. The lamp unit further includes a plurality of discharge tubes (or tubular light sources) 15 held in a horizontal position and contained in the chassis 13 so as to be vertically arranged along the front surface of the chassis 13 and parallel to one another, and a plurality of relay connectors (or terminals) 14 which are vertically arranged along the lateral edges of the chassis 13 so as to correspond to the respective discharge tubes 15. The power boards 16 are disposed on the back side of the chassis 13 so as to supply power to the discharge tubes 15 via the relay connectors 14.
A plurality of mounting holes 13H having a substantially rectangular shape are formed through the chassis 13 so as to extend from the front side to the back side, and are vertically arranged and located to overlap with the ends of the discharge tubes 15 when viewed planarly. The relay connectors 14 are mounted through the respective mounting holes 13H. Note that a view referred to as a planar view in the present embodiment corresponds to a view obtained by seeing the display surface of the liquid crystal display device D from the front side.

### [Relay Connector 14]

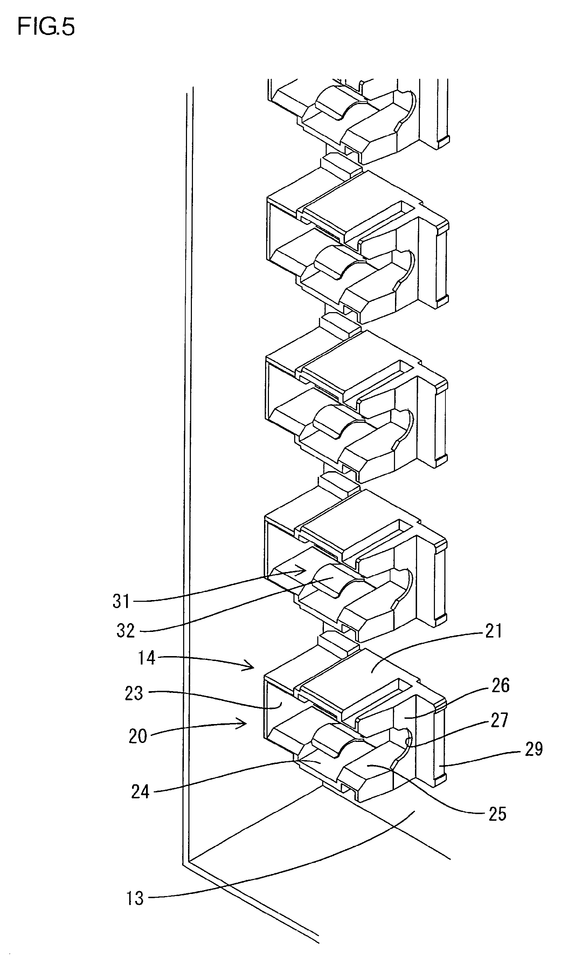

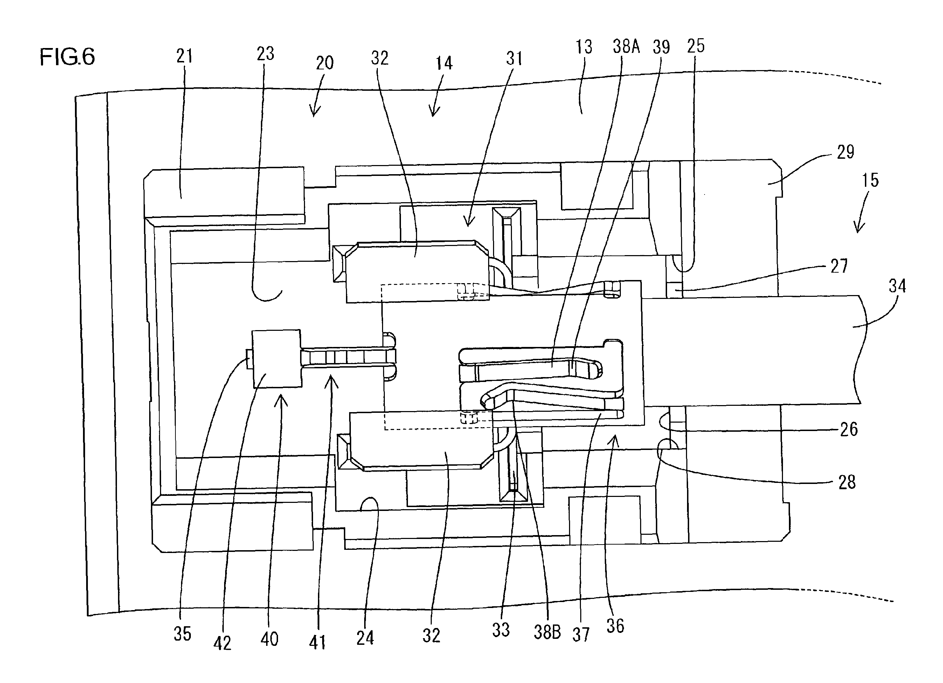

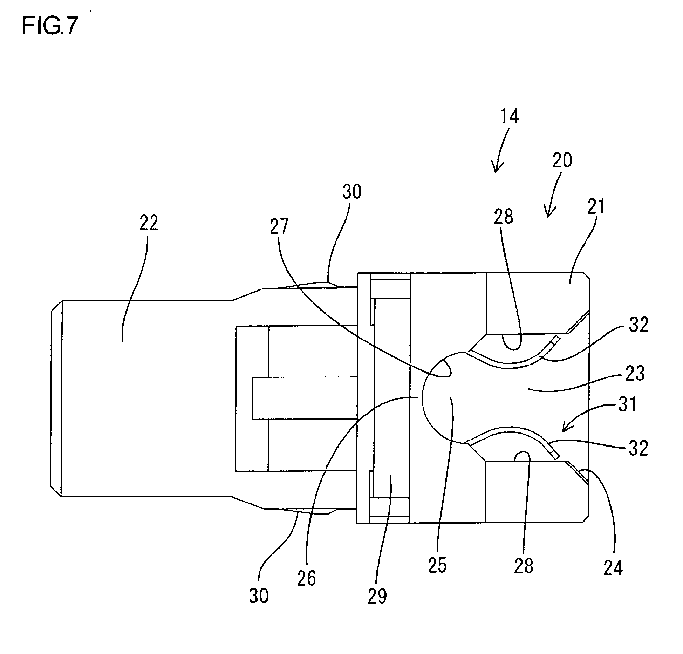

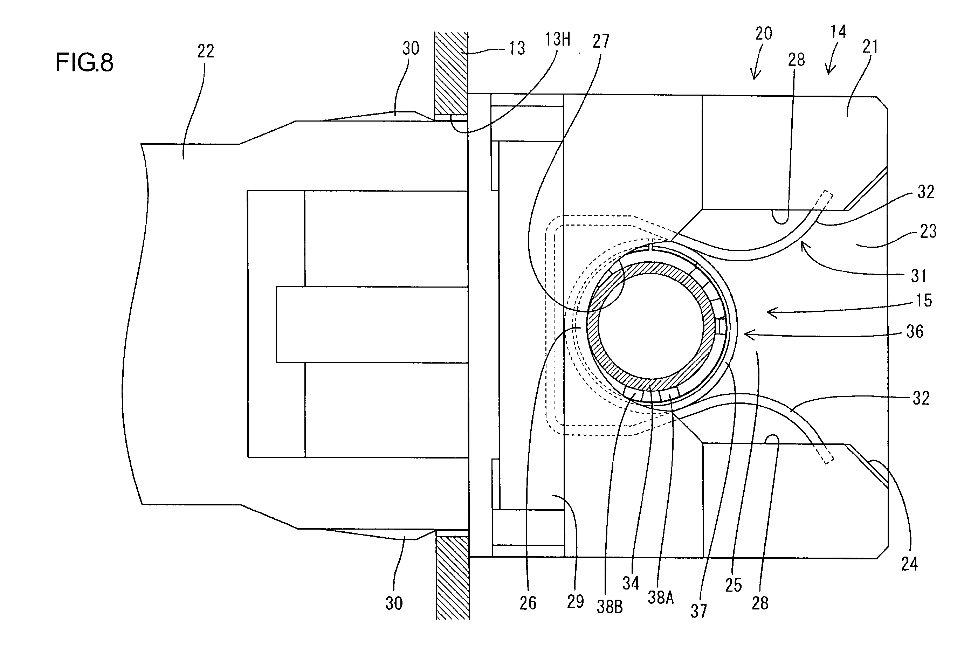

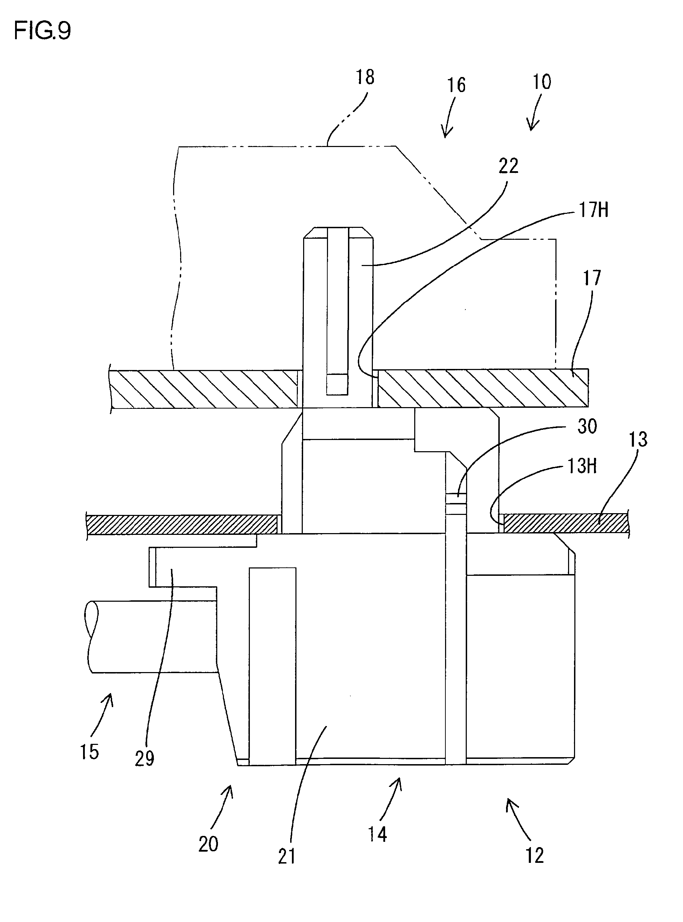

FIG. 5 is a perspective view of relay connectors 14. FIG. 6 is a partially-enlarged front view showing a connecting structure between a relay connector 14 and a discharge tube 15. FIG. 7 is a side view of a relay connector 14. FIG. 8 is an explanatory diagram showing the relay connector 14 into which a ferrule 36 of a discharge tube 15 is fitted. FIG. 9 is a sectional view showing a connecting structure between a relay connector 14 and a power board 16.
Each relay connector 14 includes a holder 20 made of synthetic resin, and a relay terminal (or a connecting member) 31 that is housed in the holder 20 and made of metal such as stainless steel.
The holder 20 includes a box-like portion 21 that forms a block-like shape as a whole, and further includes a wall portion 22 that projects backward (or toward the back side of the chassis 13) from the back surface of the box-like portion 21.

A container room 23 is formed in the box-like portion 21, so as to have an opening extending from the front side to the lateral side (i.e., the lateral side on the opposite side of the lateral edge portion of the chassis 13). The front opening portion of the opening of the container room 23 is provided as a receiving opening (or engaging base portion) 24, into which an end portion (or ferrule 36) of a discharge tube 15 can be fitted from the front side. The lateral opening portion is provided as an escape opening 25 for preventing interference with the glass tube 34 when the end portion (or ferrule 36) of the discharge tube 15 is held in the container room 23. A stopper 26 is formed on the escape opening 25, so as to bulge inward from the opening edge and form a plate-like shape. Due to the stopper 26, the escape opening 25 is narrowed to form a substantially U-shaped opening. The vertical size of the substantially U-shaped escape opening 25 is set to be smaller than the outer diameter of the body 37 of the ferrule 36 and be equal to or slightly larger than the outer diameter of the glass tube 34 of the discharge tube 15. On the escape opening 25, a concave portion 27 having a semicircular shape is formed on the far end portion of the opening edge. The radius of curvature of the concave portion 27 is set to be equal to or slightly larger than the radius of curvature of the outer circumference of the glass tube 34. On the escape opening 25, a pair of upper and lower guiding portions 28 are formed on areas of the opening edge on the front side of the concave portion 27.

On the box-like portion 21, an extended portion 29 extending parallel to the chassis 13 is formed on the lateral surface of the box-like portion 21 that includes the escape opening 25. The extended portion 29 extends so as to separate the front surface of the chassis 13 from the escape opening 25.
A pair of upper and lower retaining protrusions 30 are formed on the outer surface (i.e., upper surface and lower surface) of the wall portion 22. The retaining protrusions 30 can prevent the present relay connector 14 from escaping from the chassis 13.

The relay terminal 31 is held within the holder 20. The relay terminal 31 can be formed by bending a metallic plate that is formed into a predetermined shape by punching. The relay terminal 31 includes a pair of vertically symmetrical elastic pressing parts 32 formed of curved plates, and further includes a board connecting portion 33 formed of a flat plate-like portion that projects to the back side. The pair of elastic pressing parts 32, which are housed in the container room 23, can deflect elastically and vertically so as to increase distance therebetween. The vertical distance between the pair of elastic pressing parts 32 is shortest at a position corresponding to the front side of the concave portion 27 of the stopper 26. The minimum distance between the elastic pressing parts 32, when the elastic pressing parts 32 are not forced into elastic deflection or are in a free state, is set to be smaller than the outer diameter of the body 37 of the ferrule 36 attached on the discharge tube 15. On the other hand, the board connecting portion 33 projects from the back surface of the box-like portion 21 so as to be exposed to the outside of the holder 20, and extends backwards along the wall portion 22.

When the relay connector 14 is mounted to the chassis 13, the wall portion 22 of the holder 20 is inserted into a mounting hole 13H from the front side of the chassis 13. Thereby, the outer surface of the box-like portion 21 becomes in contact with the opening edge of the mounting hole 13H on the front surface of the chassis 13, while the retaining protrusions 30 are locked by the opening edge of the mounting hole 13H on the back surface of the chassis 13. Thus, the chassis 13 is sandwiched between the outer surface of the box-like portion 21 on the front side and the retaining protrusions 30 on the back side. Thereby, the holder 20 is fixed to the chassis 13 so that its movement in the mounting direction (i.e., the through direction of the mounting hole 13H) is restricted. Then, the mounting of the relay connector 14 to the chassis 13 is completed. When the relay connector 14 is attached to the chassis 13, the box-like portion 21 as the front end portion of the holder 20 projects (or is exposed) to the front side of the chassis 13 while the wall portion 22 as the back end portion of the holder 20 projects (or is exposed) to the back side of the chassis 13.

### [Discharge Tube 15]

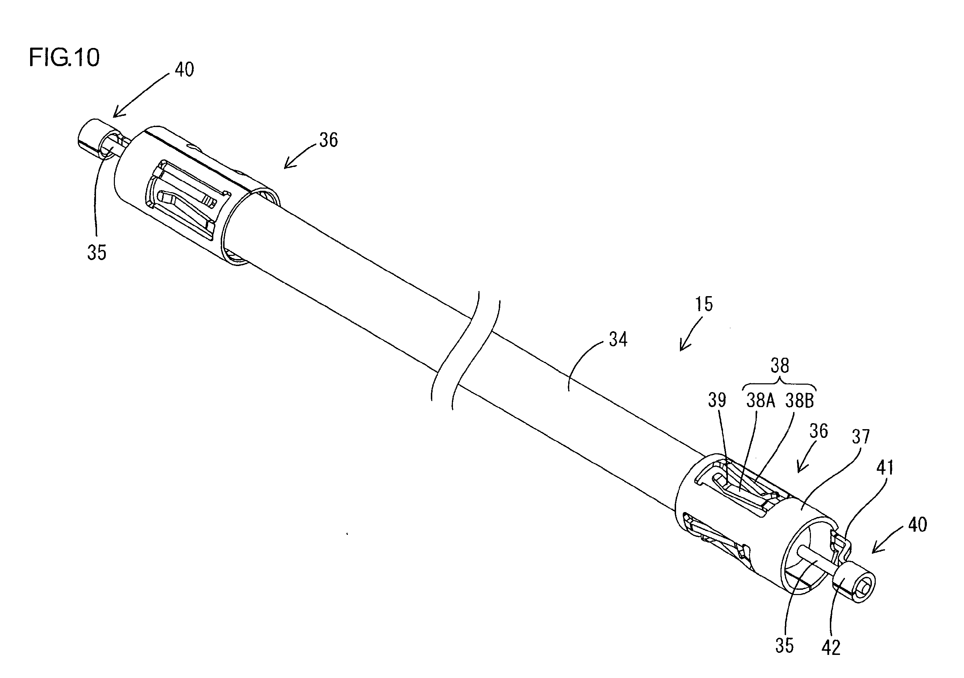

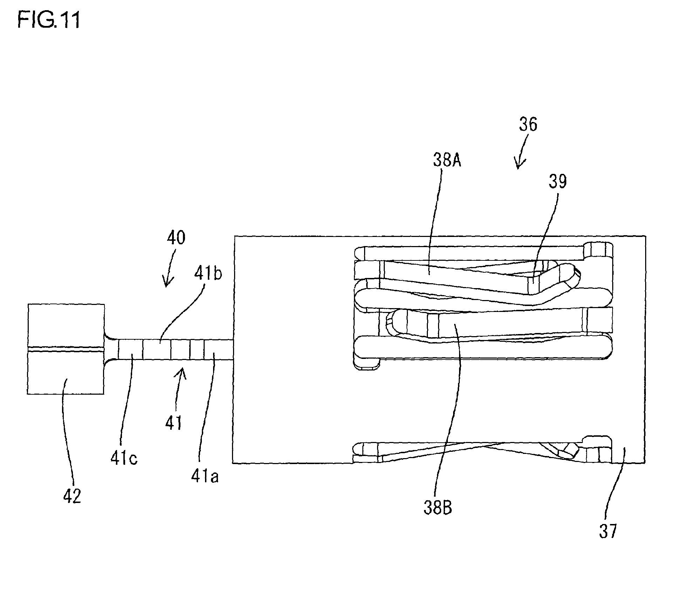

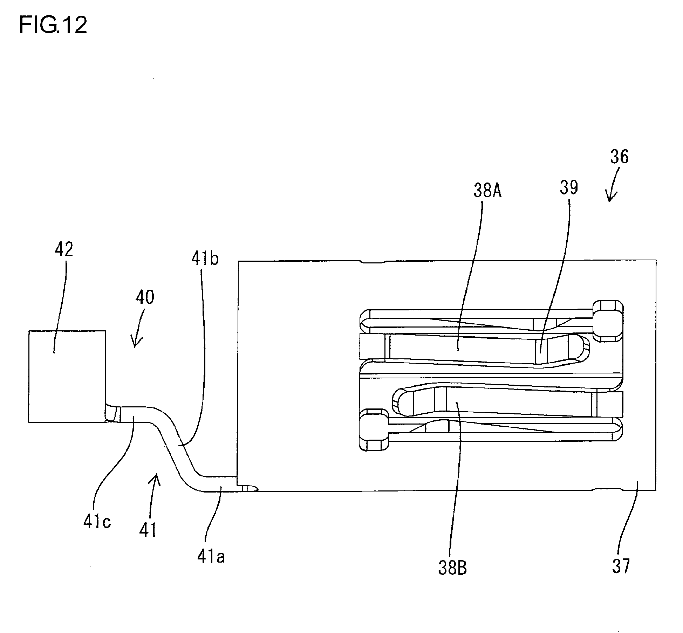

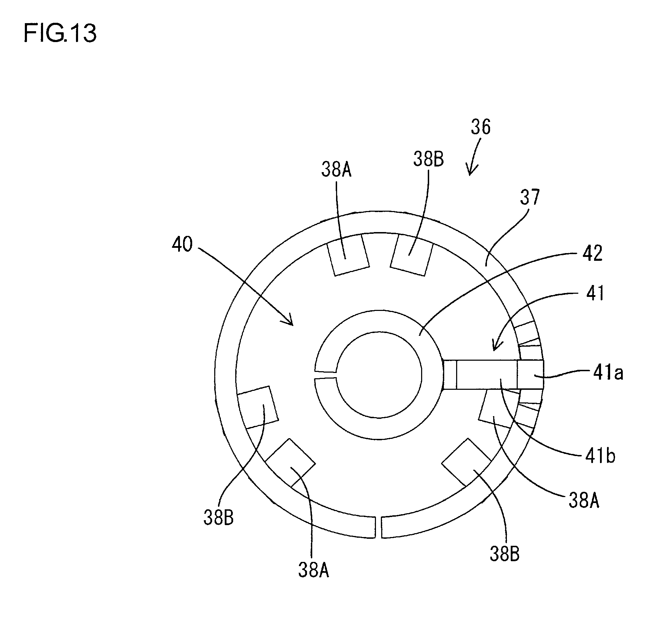

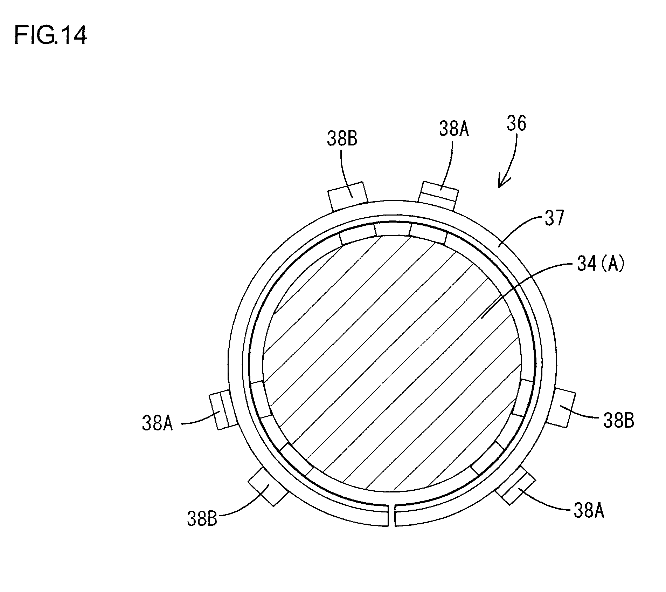

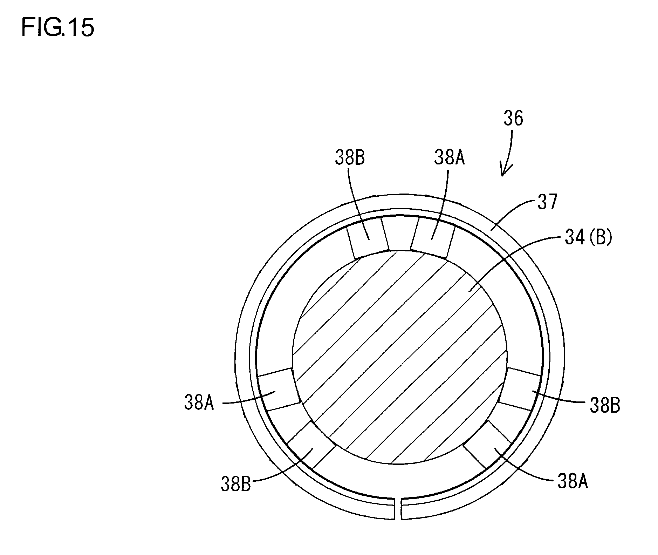

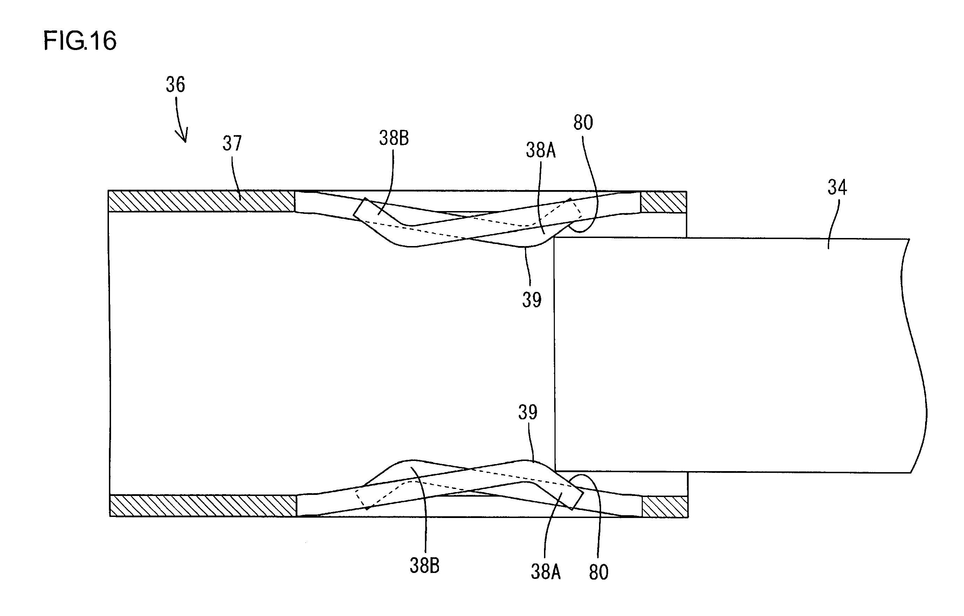

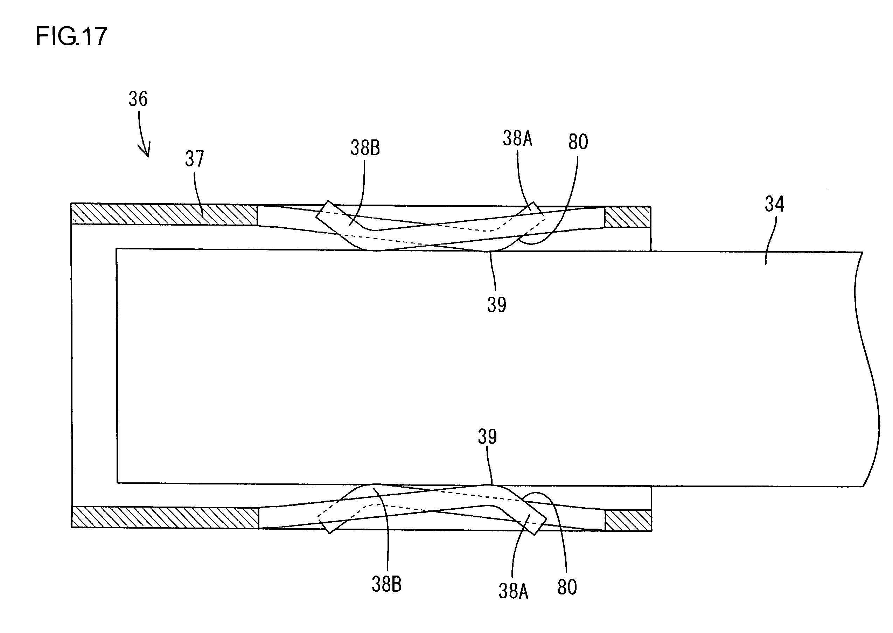

FIG. 10 is a perspective view of a discharge tube 15. FIG. 11 is a rear view of a ferrule 36. FIG. 12 is a plan view of the ferrule 36. FIG. 13 is a side view of the ferrule 36. FIG. 14 is an explanatory diagram showing the ferrule 36 into which a first glass tube 34 (A) having a relatively large diameter is fitted. FIG. 15 is an explanatory diagram showing the ferrule 36 into which a second glass tube 34 (B) having a relatively small diameter is fitted. FIG. 16 is an explanatory diagram showing how the glass tube 34 is inserted into the ferrule 36. FIG. 17 is an explanatory diagram showing how the insertion proceeds from FIG. 16.

Each discharge tube 15 is formed of a cold cathode fluorescent tube that includes a generally elongated straight glass tube 34 having a circular cross section (and having a tube diameter of 3mm). The cold cathode fluorescent tube further includes elongated metallic (e.g., nickel or cobalt metal) outer leads 35, which have a circular cross section and project linearly from the respective ends of the glass tube 34 and coaxially with the glass tube 34. Further included are ferrules 36 attached to the respective end portions of the glass tube 34. Mercury is encapsulated in the glass tube 34. Each end portion of the glass tube 34 is melted into a substantially hemispherical shape by heat, and thereby forms a domed portion. The outer lead 35 penetrates the domed portion.

Each ferrule 36 is a single-piece component having a cylindrical shape, which can be formed by bending or hammering a metallic (e.g., stainless steel) plate that is formed into a predetermined shape by punching. The ferrule 36 includes a body 37 and a conductive part 40. The body 37 generally forms a cylindrical shape concentric with the glass tube 34. The body 37 is configured so as to change its inner diameter according to the outer diameter of the glass tube 34. Specifically, elastic parts 38 (as pairs of elastic parts 38A, 38B) formed of leaf-spring-like parts capable of elastic and radial deformation are provided as inner-diameter-changing elastic members. The outer diameter is set to a fixed value, so as to be capable of being fitted to the receiving opening (or engaging base portion) 24 of a relay connector 14.

The elastic parts 38 as inner-diameter-changing elastic members include first elastic parts (or first inner-diameter-changing elastic members) 38A and second elastic parts (or second inner-diameter-changing elastic members) 38B, which are arranged at the respective axial ends of the ferrule 36. The first elastic parts are capable of elastic deformation at the opposite side of the conductive part 40, while the second elastic parts are capable of elastic deformation at the side of the conductive part 40. That is, as schematically shown in FIG. 16, the first elastic parts 38A can elastically deform at the end portion on the side of the glass tube 34 inlet (i.e., at the end portion on the opposite side of the conductive part 40), and thereby abut on the glass tube 34. The second elastic parts 38B can elastically deform at the end portion on the opposite side of the glass tube 34 inlet (i.e., at the end portion on the side of the conductive part 40), and thereby abut on the glass tube 34. Three pairs of elastic parts 38A, 38B are formed on the body 37 by making slit-like cuts in portions thereof, and are arranged at even angular intervals (or even intervals) along the circumferential direction.

Referring to FIGS. 16 and 17, a first elastic part 38A, i.e., one of a pair of elastic parts 38A, 38B, is generally formed of a cantilevered portion extending posteriorly (specifically, in an oblique direction slightly leaning radially inwardly), which is capable of elastic and radial deflection with a supported point on its proximal end (or anterior end). A curved portion 39 is formed on the distal end portion (or posterior end portion) of the first elastic part 38A, so as to curve in an oblique direction leaning radially outwardly. The outer surface of the curve (or inwardly facing surface) of the curved portion 39 is provided as a contact point when abutting on the outer circumferential surface of the glass tube 34. The imaginary line that connects the contact points provided on the three first elastic pressing parts 38A, 38A, 38A arranged in the circumferential direction forms a circle concentric with the body 37. The diameter of the imaginary circle, when the first elastic parts 38A are not forced into elastic deflection or are in a free state, is set to be smaller than the outer diameter of the glass tube 34. Further, inclined surfaces 80 are provided to extend from the apexes of the curved portions 39 to the end portion on the side of the glass tube 34 inlet (i.e., one end portion of the present ferrule 36). The glass tube 34 can be guided into the ferrule 36 along the inclined surfaces 80. The first elastic parts 38A undergo elastic deformation while having contact with the outer surface of the glass tube 34 in the course of insertion of the glass tube 34 into the present ferrule 36.

A second elastic part 38B, i.e., the other of the pair of elastic parts 38A, 38B, is arranged circumferentially adjacent to the first elastic part 38A, and is generally formed of a cantilevered portion extending anteriorly or reversely from the first elastic part 38A (specifically, in an oblique direction slightly leaning radially inwardly), which is capable of elastic and radial deflection with a supported point on its proximal end (or posterior end). The distal end of the second elastic part 38B is provided as a contact point when abutting on the outer circumferential surface of the glass tube 34. The imaginary line that connects the contact points provided on the three second elastic parts 38B, 38B, 38B forms a circle concentric with the body 37. The diameter of the imaginary circle, when the second elastic parts 38B are not forced into elastic deflection or are in a free state, is set to be smaller than the outer diameter of the glass tube 34.

The first elastic parts 38A, 38A, 38A are arranged at even intervals or at intervals of 120° along the circumferential direction of the ferrule 36. The second elastic parts 38B, 38B, 38B are arranged at even intervals or at intervals of 120° along the circumferential direction of the ferrule 36. The first elastic part 38A and the second elastic part 38B of each pair are circumferentially adjacent to each other. That is, as shown in FIG. 13, the first elastic parts (i.e., members of a group of first inner-diameter-changing elastic members) 38A, 38A, 38A and the second elastic parts (i.e., members of a group of second inner-diameter-changing elastic members) 38B, 38B, 38B are alternately arranged in staggered form when the ferrule 36 is viewed along the axial direction.

The conductive part 40 is provided as a cantilevered portion that extends anteriorly from the anterior end of the body 37. The conductive part 40 includes a long portion 41 continuous with the anterior end of the body 37, and a cylindrical portion 42 that further projects anteriorly from the anterior end (or distal end) of the long portion 41.

Referring to FIGS. 11 to 13, the long portion 41 includes a proximal portion 41a that extends from the body 37 so as to be flush with the body 37 and parallel to the axis thereof, and further includes an intermediate portion 41b that extends radially inwardly from the distal end of the proximal portion 41a toward the axis of the body 37. Further included is a distal portion 41c that extends from the distal end of the intermediate portion 41b and parallel to the axis of the body 37. The cylindrical portion 42 is connected to the distal end of the distal portion 41c. The width of the long portion 41 is set to be sufficiently small for the length of the long portion 41. Therefore, the long portion 41 is capable of elastic deformation in the radial direction of the body 37, elastic deformation in a direction intersecting with the radial direction (and intersecting with the longitudinal direction of the long portion 41), and elastic torsional deformation around the long portion 41 itself as the axis.
The cylindrical portion 42, which can be formed by bending a portion laterally extending from the distal end of the long portion 41 into a cylindrical shape, is arranged substantially coaxially with the body 37. The cylindrical portion 42 is capable of displacement around the axis of the ferrule 36 and radial displacement, due to elastic deflection of the long portion 41.

### [Attachment of Ferrule 36 to Glass Tube 34]

Next, an assembling process for attaching a ferrule 36 to a glass tube 34 will be explained.
During the assembling process, while a ferrule 36 and a glass tube 34 are held by respective holding devices (not shown), the ferrule 36 and the glass tube 34 are moved relatively and coaxially so as to approach each other. Thereby, the body 37 is fitted onto the glass tube 34. In the course of insertion of the glass tube 34 into the body 37, the tapered surfaces formed of the inclined surfaces 80, 80, 80 of the three first elastic parts 38A, 38A, 38A provide guidance for the insertion as shown in FIG. 16, and thereby the glass tube 34 can be guided into the body 37.

During the insertion of the glass tube 34 into the body 70, the first elastic parts 38A undergo elastic deformation while the glass tube 34 has contact with the inclined surfaces 80, and the elastic deformation of the first elastic parts 38A continues until the outer circumferential surface of the glass tube 34 becomes in contact with the curved portions 39 of the first elastic parts 38A as a result of further progress in insertion. When the insertion thereafter further proceeds, the glass tube 34 becomes in contact with the inner sides of the second elastic parts 38B at the other end side. Then, the glass tube is pushed to the other end side while involving elastic deformation of the second elastic parts 38B. Consequently, the glass tube 34 is fitted to the body 37 while being caught by the first and second elastic parts 38A, 38B, as shown in FIG. 17.

When the insertion of the glass tube 34 further proceeds, the tip of the outer lead 35 having passed through the body 37 begins to enter the hollow of the cylindrical portion 42 (See FIG. 10). When both of the holding devices (not shown) have thereafter reached predetermined final positions, the ferrule 36 and the glass tube 34 are axially positioned in proper positions, resulting in the tip end portion of the outer lead 35 circumferentially surrounded by the cylindrical portion 42. At the time, the tip end portion of the outer lead 35 will not greatly protrude from the anterior end of the cylindrical portion 42. That is, it slightly protrudes out of the cylindrical portion 42, or is aligned with the anterior end of the cylindrical portion 42, or alternatively it is located within the cylindrical portion 42.
Thereafter, the cylindrical portion 42 is clamped so as to deform with diameter reduction. After being clamped, the cylindrical portion 42 is electrically conductively fixed to the outer lead 35 by welding, and consequently the ferrule 36 is integrated with the glass tube 34. Then, the assembling process terminates, and the discharge tube 15 is completed.

When the ferrule 36 is attached to the glass tube 34, the body 37 is concentrically held on the glass tube 34 due to the elastic holding function of the elastic parts 38A, 38B. A gap (airspace) is secured between the outer circumference of the glass tube 34 and the inner circumference of the body 37, so as to extend over the substantially entire circumference.
The body 37 of the ferrule 36, which is thus provided to be capable of holding the glass tube 34 due to the elastic deformation of the elastic parts 38A, 38B, can vary in inner diameter depending on the outer diameter of the glass tube 34. According to the construction, the ferrules 36 can be used as common ferrules for glass tubes 34 differing in outer diameter.

### [Mounting of Discharge Tube 15 to Relay Connectors 14]

The discharge tube 15, thus assembled, is fixed to relay connectors 14 (See FIGS. 6, 8 and 9). At the time of fixation, the discharge tube 15 held in a horizontal position is moved toward the front face of the chassis 13, and the end portions and the ferrules 36 of the glass tube 34 are fitted into the container rooms 23 of the relay connectors 14 from the front side. At the time, the pair of elastic pressing parts 32 are pushed by the body 37 of the ferrule 36 so as to open vertically due to elastic deflection. After the body 37 has passed through the shortest-distance portions of the pair of elastic pressing parts 32, the body 37 is pulled deep into the container room 23 due to elastic restoring forces of the elastic pressing parts 32, resulting in the body 37 abutting on the bottom of the container room 23. Then, the mounting of the discharge tube 15 is completed.

The discharge tube 15 thus mounted is held by the pairs of elastic pressing parts 32 at its end portions, and consequently is fixed to the chassis 13 via the relay terminals 31 and the holders 20 provided as the relay terminal 31 mounting bases. At the time, the weight of the discharge tube 15 is received solely by the chassis 13 via the relay connectors 14. That is, the outer leads 35 will not be under load due to the weight of the discharge tube 15.

The pair of elastic pressing parts 32 can have elastic contact with the outer circumferential surface of the body 37, and thereby the outer lead 35 is electrically conductively connected to the relay terminal 31 via the ferrule 36. Further, the glass tube 34 is held due to elastic restoring forces of the pair of elastic pressing parts 32, so as to be pressed against the concave portion 27 of the stopper 26. Therefore, when viewed along the axial direction of the discharge tube 15, the body 37 appears to be positioned so as to partially overlap with the stopper 26. That is, the end edge of the body 37 on the opposite side of the conductive part 40 is axially positioned in proximity to the stopper 26 so as to be partially faced therewith.

The extended portion 29 is formed on the outer surface of the holder 20 or the outer surface perpendicular to the planar surface of the chassis 13 and including the escape opening 25 of the container room 23. The extended portion protrudes from between the chassis 13 and the escape opening 25, and extends along the planar surface of the chassis 13. This results in a long creepage distance from the inside of the container room 23 to the front surface of the chassis 13. Thereby, a leak, from the discharge tube 15 held in the container room 23 to the chassis 13 outside the holder 20, can be prevented.

### [Overview of Power Boards 16]

Referring to FIG. 2, each power board 16 includes a circuit board 17 having a circuit formed on its back surface (i.e., the surface on the opposite side of the chassis 13), electronic components 19 mounted on the back surface of the circuit board 17, and a plurality of on-board connectors 18 mounted on the back surface of the circuit board 17.
The circuit board 17 has a vertically-elongated rectangular shape as a whole, and is formed using a phenolic paper-base copper-clad laminated board (known as a phenolic paper). A plurality of fitting holes 17H having a vertically-elongated rectangular shape are formed through the circuit board 17 so as to extend from the front side to the back side (See FIG. 9). The plurality of fitting holes 17H are arranged vertically along the lateral side edge of the circuit board 17 so as to correspond to the above-described relay terminals 31 (or relay connectors 14).
Each on-board connector 18 includes a housing made of synthetic resin, and an output terminal (not shown) that is completely contained in the housing and made of metal (e.g., nickel silver). The on-board connectors 18 are arranged along the lateral side edge of the circuit board 17 so as to correspond to the respective fitting holes 17H. A fitting space (not shown) is formed on the outer surface of the housing so as to correspond to the fitting hole 17H, and the output terminal is partly exposed to the fitting space.

While the circuit board 17 is kept parallel to the chassis 13, the power board 16 is moved toward the chassis 13 from the back side and is fixed thereto. At the time of fixation, the wall portions 22 of the relay connectors 14 and the board connecting portions 33 arranged along the wall portions 22 penetrate the circuit board 17 through the fitting holes 17H and are inserted into the engaging recesses 27 of the on-board connectors 18. Thereby, the on-board connectors 18 are fitted onto the relay connectors 14, and the output terminals are conductively connected to the relay terminals 31.

In the above lighting device 10, the liquid crystal display device D having the lighting device 10, and the television receiver TV having the liquid crystal display device D, the discharge tubes 15 included in the lighting device 10 have ferrules 36, which include elastic parts 38 capable of elastic and radial deformation so as to change their inner diameter depending on the outer diameter of the glass tube 34. According to the construction, if the outer diameter of the glass tube 34 is changed due to a design change for varying the brightness of discharge tubes 15 according to the type of the liquid crystal display device D, the same ferrules 36 as those having been used before the design change can be used as common ferrules. In the case of the glass tube 34 having a tube diameter of 3mm according to the present embodiment, the elastic parts 38 (38A, 38B) can undergo elastic deformation as shown in FIG. 14. In the case of another glass tube 34 having a tube diameter of 4mm, the same ferrule 36 can be used as a common ferrule, so as to be fitted onto the glass tube 34 having a tube diameter of 4mm as shown in FIG. 15. That is, the ferrule 36 capable of being used for the glass tube 34 having a tube diameter of 3mm can be also applied to a glass tube 34 having a tube diameter of 4mm, while involving relatively small deformation of the elastic parts 38 (38A, 38B) as shown in FIG. 15.

The elastic parts 38 (38A, 38B) are provided to undergo elastic deformation while having contact with the outer surface (or outer circumferential surface) of a glass tube 34 in the course of insertion of the glass tube 34 into (the body 37 of) the ferrule 36. According to the construction, the glass tube 34 can be smoothly inserted into the ferrule 36. Further, the elastic parts 38 (38A, 38B) are arranged at even intervals along the circumferential direction of the ferrule 36, so that the inner diameter of the ferrule 36 can vary evenly along the radial direction. Consequently, the ferrule 36 can be fitted on the glass tube 34 in a balanced manner, while being prevented from uneven radial variation.

The elastic parts 38 include first elastic parts 38A and second elastic parts 38B, which are arranged at the respective axial ends of (the body 37 of) the ferrule 36. According to the construction, the radial variation according to the outer diameter of the glass tube 34 is possible at the respective ends of (the body 37 of) the ferrule 36, and thereby the inner diameter of (the body 37 of) the ferrule 36 can be provided uniformly along the axial direction. Consequently, the ferrule 36 (or the body 37 thereof) can be fitted on the glass tube 34 in a balanced manner.

Particularly, the first elastic parts 38A provided at the side of the glass tube 34 inlet and the second elastic parts 38B provided at the side of the conductive part 40 are alternately arranged in staggered form when the ferrule 36 is viewed along the axial direction. Thereby, the glass tube 34 fitted thereto can be stably held therein. That is, the contact points between the ferrule 36 and the glass tube 34 are located so that those provided on one end portion are displaced along the circumferential direction from those provided on the other end portion, which enables stable fitting.

The elastic parts 38 include curved portions 39, which are bent to bulge radially inwardly from the inner surface of the ferrule 36. The elastic parts further include inclined surfaces 80 extending from the apexes of the curved portions 39 to the end portion of the ferrule 36. The glass tube 34 can be guided into the ferrule 36 along the inclined surfaces 80. The elastic parts 38 thus constructed can combine a function for enabling variation of the inner diameter of the ferrule 36 and a function for guiding the glass tube 34. Consequently, the insertion of the glass tube 34 into the ferrule 36 is facilitated, and the variation of the inner diameter of the ferrule 36 can be adequately achieved due to elastic deformation of the elastic parts 38 during the insertion.

Shown above is an embodiment of the present invention.
However, the present invention is not limited to the embodiment explained in the above description made with reference to the drawings. The following embodiments may be included in the technical scope of the present invention, for example.
The leaf-spring-like elastic parts 38 are above shown as optimal inner-diameter-changing elastic members. However, the inner-diameter-changing elastic members are not limited to this construction, but rather may be formed of bulging rubber members arranged to protrude from the inner surface of the body 37 of the ferrule 36.

The first elastic parts 38A and the second elastic parts 38B, which are arranged at the respective ends of (the body 37 of) the ferrule 36, are shown as inner-diameter-changing elastic members, for illustrative purposes. However, the elastic parts may be provided solely at one end portion (i.e., preferably, the end portion on the inlet side).

The three pairs of elastic parts 38 arranged in the circumferential direction are shown for illustrative purposes. However, one elastic part or any number of elastic parts may be provided. Further, the elastic parts 38 are not limited to being formed of cantilevered portions extending anteriorly or posteriorly, but rather may be formed of two-point supported portions which are supported on the body at their anterior and posterior ends.

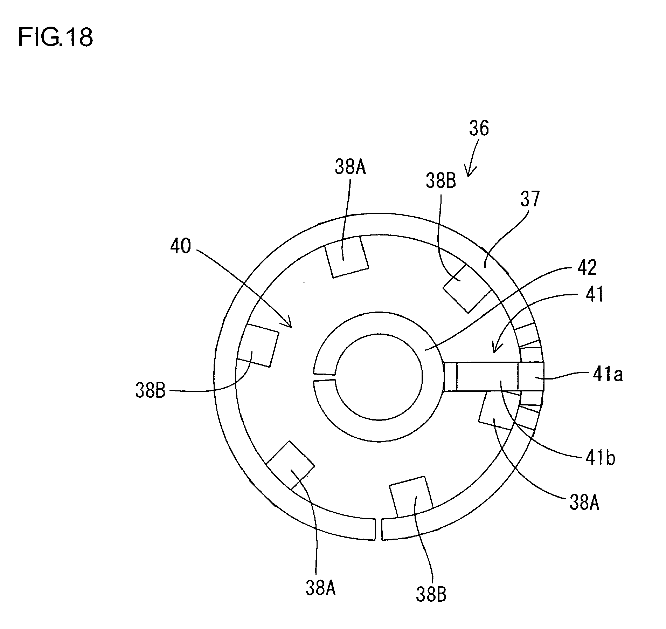

The first elastic parts 38A and the second elastic parts 38B of the elastic parts 38 are alternately arranged in staggered form when the ferrule 36 is viewed along the axial direction.
Particularly, the first elastic parts 38A and the second elastic parts 38B may be arranged at intervals of 60°, as shown in FIG. 18. Similarly, in the case that the first elastic parts 38A can be arranged at intervals of X° along the circumferential direction, the second elastic parts 38B may be located to be shifted by a distance of (X/2)° from the respective first elastic parts 38A when the ferrule 36 is viewed along the axial direction.

According to the construction in which the first elastic parts 38A are thus arranged at intervals of X° (e.g., 120° in the present embodiment) along the circumferential direction while the second elastic parts 38B are located to be shifted by a distance of X/2 (e.g., 60° in the present embodiment) from the respective first elastic parts 38A when the ferrule 36 is viewed along the axial direction, the ferrule 36 can be fitted on the glass tube 34 in a more balanced manner.

A metallic material other than stainless steel may be used for ferrules 36. Alternatively, a nonmetallic material, such as a conductive resin or a conductive rubber, may be used instead. The outer leads 35 projecting from a glass tube 34 are not limited to being arranged concentrically with the glass tube 34, but rather may be arranged radially eccentrically with respect to the axis of the glass tube 34. Further, the outer leads 35 linearly projecting from a glass tube 34 are not limited to being arranged parallel to the axis of the glass tube 34, but rather may be arranged at an angle with the axis of the glass tube 34. Moreover, the outer leads may be formed crookedly.

The discharge tubes 15 are not limited to cold cathode fluorescent tubes. Hot cathode fluorescent tubes, xenon tubes or the like may be used instead. The portion of the conductive part 40 to be connected to the outer lead 35 is not limited to having a cylindrical shape capable of circumferentially surrounding the outer lead 35. It may be provided as a substantially U-shaped or V-shaped portion so that the valley portion of the U or V shape can have contact with the outer lead. Alternatively, the conductive part 40 may be provided to have a plate-like distal end portion that can have contact with the outer periphery of the outer lead 35. In this case, a valley may be formed on the plate-like distal end portion of the conductive part 40, so that the outer lead 35 can engage with the valley.

The liquid crystal panel 11 of the liquid crystal display device D is not limited to having TFTs as switching elements, but rather may include, as switching elements, elements other than TFTs such as MIM (Metal Insulator Metal) elements. The display device is not limited to a liquid crystal display device D. Various display devices requiring a lighting device on the back side of a display panel can be included.

## Claims

1. A lighting device for a display device, comprising:
a tubular light source; and
a terminal used to supply power to said tubular light source, wherein:
said tubular light source includes:
a glass tube; and
a ferrule having a cylindrical shape capable of being fitted to said glass tube, said ferrule capable of making electrically connection between said tubular light source and said terminal; and
said ferrule includes an inner-diameter-changing elastic member capable of elastic and radial deformation to change an inner diameter thereof according to an outer diameter of said glass tube.

2. A lighting device for a display device, as in claim 1, wherein said inner-diameter-changing elastic member undergoes elastic deformation while having contact with an outer surface of said glass tube in course of insertion of said glass tube into said ferrule.

3. A lighting device for a display device, as in claim 1 or 2, wherein said inner-diameter-changing elastic member includes a plurality of inner-diameter-changing elastic members, which are arranged at even intervals along a circumferential direction of said ferrule.

4. A lighting device for a display device, as in any one of claims 1 to 3, wherein said inner-diameter-changing elastic member is provided at each axial end of said ferrule.

5. A lighting device for a display device, as in any one of claims 1 to 4, wherein:
said inner-diameter-changing elastic member includes a plurality of inner-diameter-changing elastic members, which are arranged at even intervals along a circumferential direction of said ferrule and at axial ends of said ferrule;
said plurality of inner-diameter-changing elastic members are grouped into a first group of the inner-diameter-changing members arranged at even intervals and at one of the axial ends and a second group of the inner-diameter-changing elastic members arranged at even intervals and at another of the axial ends; and
the inner-diameter-changing elastic members of the first and the second groups are alternately arranged in staggered form when said ferrule is viewed along the axial direction.

6. A lighting device for a display device, as in claim 5, wherein the inner-diameter-changing elastic members of said first group are arranged at same intervals along the circumferential direction, as intervals at which the inner-diameter-changing elastic members of said second group are arranged along the circumferential direction.

7. A lighting device for a display device, as in claim 6, wherein:
the inner-diameter-changing elastic members of said first group are arranged at intervals of a distance represented by X along the circumferential direction; and
the inner-diameter-changing elastic members of said second group are located to be shifted by a distance represented by X/2 from the inner-diameter-changing elastic members of said first group when said ferrule is viewed along the axial direction.

8. A lighting device for a display device, as in any one of claims 1 to 7, wherein said inner-diameter-changing elastic member includes an elastic part formed of a leaf-spring-like part provided in a hollow of said ferrule.

9. A lighting device for a display device, as in claim 8, wherein:
said elastic part formed of a leaf-spring-like part is provided to extend along an axial direction of said ferrule;
said elastic part includes a curved portion that is bent to bulge radially inwardly from an inner surface of said ferrule;
said elastic part includes an inclined surface extending from an apex of said curved portion to an end portion of said ferrule; and
said glass tube is guided into said ferrule along said inclined surface.

10. A lighting device for a display device, as in any one of claims 1 to 9, further comprising:
a chassis that houses said tubular light source, wherein:
said terminal is mounted to said chassis, and includes an engaging base portion to which said ferrule of said tubular light source is fitted; and
said ferrule of said tubular light source is fitted to said engaging base portion to mount said tubular light source to said chassis and to supply power to said tubular light source.

11. A lighting device for a display device, as in claim 10, wherein:
said chassis has a planar surface on a side of said tubular light source contained in said chassis, and said terminal is arranged on said planar surface;
an inverter board for supplying power to said tubular light source is arranged on a surface of said chassis that is on an opposite side of said tubular light source contained in said chassis; and
said terminal is arranged to penetrate through said chassis, and is connected to said inverter board.

12. A lighting device for a display device, as in any one of claims 1 to 11, wherein:
said tubular light source includes an outer lead that projects from an end portion of said glass tube and extends along an axial direction of said glass tube; and
said ferrule includes a conductive part that extends from one end thereof and is connected to said outer lead.

13. A display device comprising:
a lighting device for a display device, as in any one of claims 1 to 12; and
a display panel for providing display by use of light from said lighting device for a display device.

14. A display device as in claim 13, wherein said display panel is provided as a liquid crystal panel in which liquid crystal is sealed between a pair of substrates.

15. A television receiver comprising a display device as in claim 13 or 14.
